(19) Europäisches Patentamt
European Patent Office
Office européen des brevets

(11) **EP 2 251 641 A1**

(12) **EUROPEAN PATENT APPLICATION**

(43) Date of publication:
**17.11.2010 Bulletin 2010/46**

(51) Int Cl.:
***G01C 19/72*** *(2006.01)*

(21) Application number: **10161689.4**

(22) Date of filing: **30.04.2010**

(84) Designated Contracting States:
**AT BE BG CH CY CZ DE DK EE ES FI FR GB GR HR HU IE IS IT LI LT LU LV MC MK MT NL NO PL PT RO SE SI SK SM TR**
Designated Extension States:
**AL BA ME RS**

(30) Priority: **11.05.2009 US 463887**

(71) Applicant: **Honeywell International Inc.**
**Morristown, NJ 07962 (US)**

(72) Inventors:
• **Qiu, Tiequn**
**Morristown, NJ 07962-2245 (US)**
• **Sanders, Steven J.**
**Morristown, NJ 07962-2245 (US)**
• **Narayanan, Chellappan**
**Morristown, NJ 07962-2245 (US)**

(74) Representative: **Buckley, Guy Julian**
**Patent Outsourcing Limited**
**1 King Street**
**Bakewell**
**Derbyshire DE45 1DZ (GB)**

(54) **Systems and methods for effective relative intensity noise (rin) subtraction in depolarized gyros**

(57) Effective relative intensity noise (RIN) subtraction systems and methods for improving ARW performance of a depolarized gyros. This invention taps the RIN detector light in the sensing loop, after the light transmits through the depolarizer and the coil but before it combines with the counter propagating lightwave. The tapped RIN lightwaves are polarized with pass-axis orientated in the same direction as that of the IOC, so that the RIN detector receives lightwaves with spectrum substantially identical to that of the rate detector, leading to more effective RIN subtraction.

*FIG.3*

EP 2 251 641 A1

**Description**

**BACKGROUND OF THE INVENTION**

Relative intensity noise (RIN) is one of the major contributors to interferometric fiber optic gyro (IFOG) angle random walk (ARW). Electric intensity-noise-subtraction has been used to reduce the RIN in order to improve the gyro performance. However, for depolarized single mode (SM) IFOGs, the RIN subtraction has not been as effective as that for polarization maintaining (PM) IFOGs due to mismatch between the lightwave spectra at the RIN detector and that at the rate detector. This spectrum mismatch is originated from the gyro depolarizer and the birefringence of the single mode coil fiber.

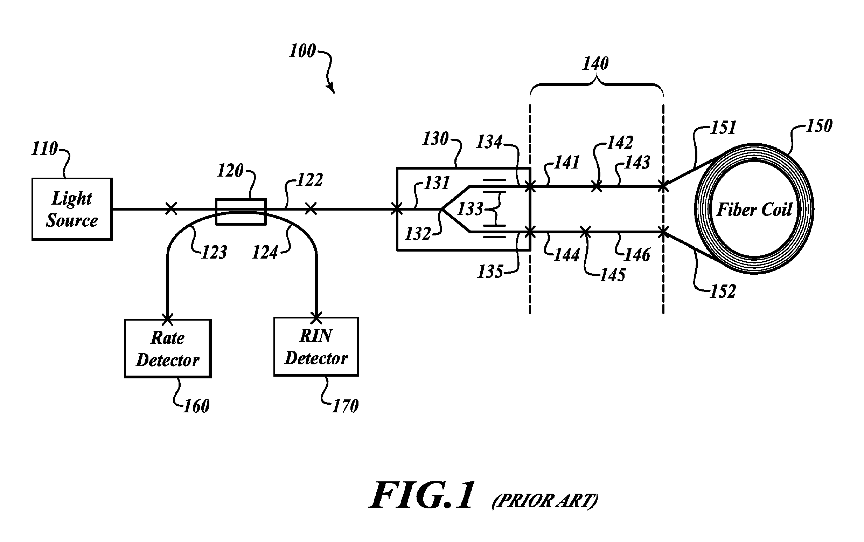

FIGURE 1 shows a typical prior art RIN subtraction scheme in a depolarized fiber optic gyroscope 100. The lightwave emit from a light source 110 is directed by a 2X2 fiber coupler 120 into the input waveguide 131 of an integrated optical circuit (IOC) 130. A Y junction splitter/combiner 132 of the IOC splits the input lightwaves into substantially equal parts, one of them (the CW light) is directed to waveguide 134 and the other (the CCW light) to waveguide 135. The lightwaves in the waveguides 134, 135 are phase modulated by a modulator 133 and then coupled into a depolarizer section 140 having polarization maintaining fibers 141, 143, 144 and 146 that are spliced at splices 142 and 145 having 45° angles between the polarization axes of the adjacent PM fibers. Ends 151 and 152 of a non-PM single mode (SM) coil fiber 150 are connected to the PM fiber 143 and 146, respectively. The returned CW and CCW lightwaves passing through the coil fiber 150 are recombined at Y junction (combiner 132) and propagate to a rate detector 160 after being directed by the 2X2 fiber coupler 120 from a port 122 to a port 123.

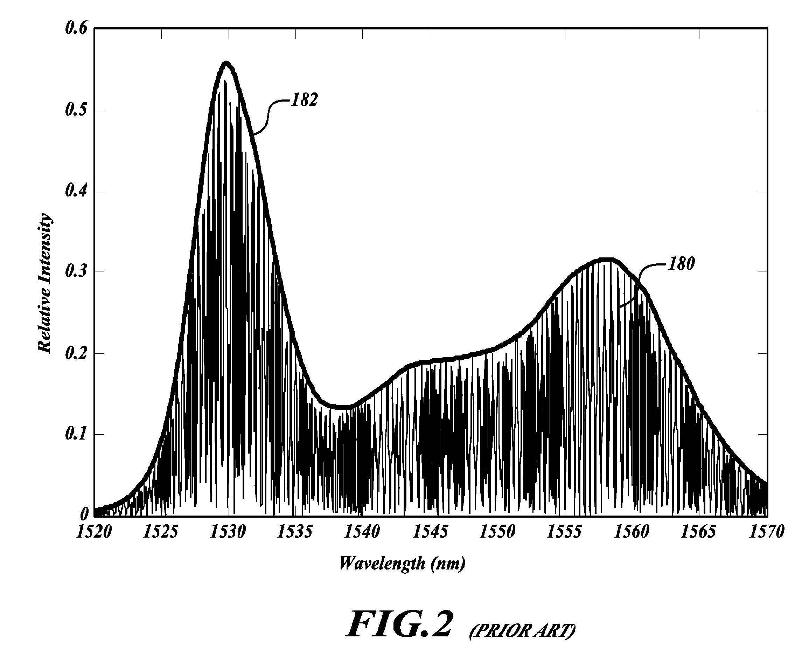

In this prior art, the light source intensity noise is typically measured at a port 124 of the 2X2 fiber coupler 120 by a RIN detector 170 and then electronically subtracted from the gyro rate detector signals after proper delays. This RIN tapping scheme works well for a PM gyro (not shown in FIGURE 1) which uses a PM fiber coil and no depolarizers, because the light spectra at the rate and RIN detector are substantially identical. In such a PM gyro, the polarization states of all the spectral components of the light source are aligned with the pass axis of the sensing loop and can reach the rate detector. However, this is not the case for the depolarized gyroscope. In the depolarized gyro shown in FIGURE 1, the polarization states of different spectral components of the light source are not preserved along the optical path because the coil fiber is not polarization maintaining (PM) and there are 45° splices in the depolarizers. The polarization states of the spectral components may not be orientated parallel to the pass-axis of the IOC after transit through the optical circuit, thus being attenuated or blocked from entering the rate detector. As shown in FIGURE 2, the lightwave spectrum 180 at the rate detector is spectrally modulated/channelized and significantly different from the lightwave spectrum 182 at the RIN detector. This spectral mismatch between rate and RIN causes significant degradation of RIN subtraction efficiency.

**SUMMARY OF THE INVENTION**

The present invention provides a more effective RIN subtraction method which will significantly improve the ARW performance of the depolarized gyros. This invention uses a scheme that taps the RIN detector light in the sensing loop, after the light transits through the depolarizer and the coil but before it combines with the counter propagating lightwave. The tapped RIN lightwaves are polarized by a following polarizer with pass axis orientated in the same direction as that of the IOC. In this way, the RIN detector receives lightwaves with spectrum substantially identical to that of the rate detector, leading to more effective RIN subtraction. Since the rotation and modulation induced lightwave phase variations are not converted to intensity variations at the RIN detector (interference with the counter propagating light does not happen), only the unwanted intensity noise is subtracted out from the rate signal. This scheme has an additional advantage of easy satisfaction of the delay requirement of the RIN signal relative to the rate signal without using a long delay fiber or additional electronics. Furthermore, since the RIN signals are tapped after the light transit through the coil fiber (up to a few kilometers), the intensity fluctuations originated from changes of coil loss are identical to both rate and RIN detector, leading to more efficient noise subtraction.

In the present invention, there are two preferred embodiments of the invention. One is to insert a PM-coupler at one of the IOC output fibers connected to the depolarizer. This coupler couples a small amount of light that transits through the coil and directs it to the RIN detector. Properly polarizing the RIN light and isolating it from returning to the sensing loop are necessary. Another embodiment requires a new design of the integrated optical circuit (IOC) which incorporates the RIN tap coupler and the polarizer inside the IOC. This scheme increases the level of component integration and helps to realize a more compact gyro design.

**BRIEF DESCRIPTION OF THE DRAWINGS**

Preferred and alternative embodiments of the present invention are described in detail below with reference to the following drawings:

FIGURE 1 is a schematic view of a depolarized gyroscope with a typical prior art RIN subtraction scheme;

FIGURE 2 is a plot of lightwave spectra at RIN and rate detector for a typical depolarized gyroscope;

FIGURE 3 is a schematic view of an optical circuit according to an embodiment of the invention; and

FIGURE 4 is a schematic view of an optical circuit according to another embodiment of the invention.

## DETAILED DESCRIPTION OF THE INVENTION

Relative intensity noise (RIN) of a broadband light source originates from beating of the different optical frequency components contained in the light source. For an interferometric fiber optic gyroscope (IFOG), the RIN at the rate detector is determined by the light source spectrum reached the detector. In order to effectively subtract the intensity noise from the rate detector, another detector (RIN detector) dedicated to record the RIN of the light source at a different place of the optical circuit is desirable to receive light with substantially the same spectrum as that of the rate detector. The present invention describes systems and methods for effective RIN subtraction in depolarized gyros using matched light spectra at RIN and rate detectors.

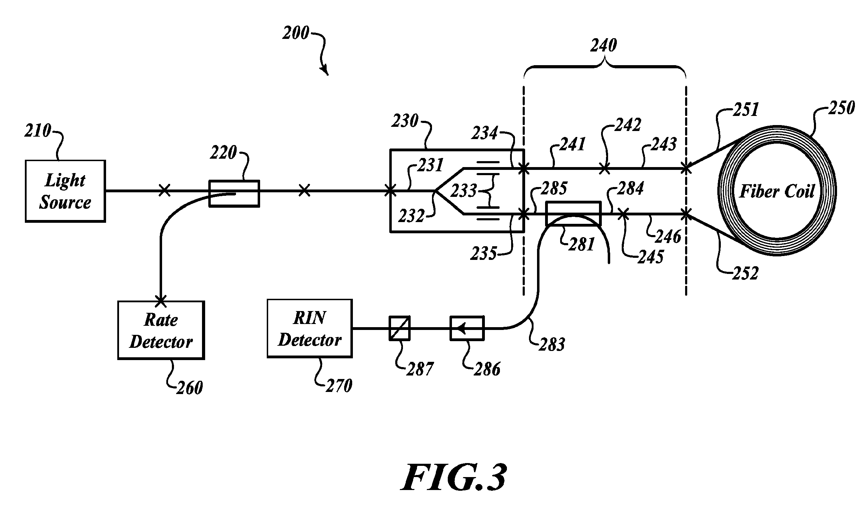

Referring to FIGURE 3, according to one embodiment of the present invention, a depolarized gyro 200 includes a light source 210, a directional coupler 220, an integrated optical circuit (IOC) 230, and a fiber loop 250. These elements may be identical to the elements 110, 120, 130, and 150 shown in FIGURE 1, respectively. Lightwaves emitted from source 210 are coupled into an input waveguide 231 of the IOC 230 and split at a Y-shape splitter/combiner 232 into CW and CCW propagating waves.

Before being coupled into the fiber coil 250, the CW (CCW) light in a waveguide 234 (235) first propagates to an upper (lower) of a depolarizer 240 section that includes a PM fiber 241 (284, 285) and 243 (246). The polarization pass-axis of the IOC 230 is aligned with that of the PM fiber 241 (284, 285), and the polarization axes of 241 (284) and 243 (246) are oriented 45° with respect to each other at the fiber splice 242 (245). In such a configuration, each wavelength component of the broadband light source launched into the coil will have a different polarization state ranging from linear to elliptical to circular shapes that in total form a nearly depolarized light. CW (CCW) lightwaves exiting end 252 (251) of the fiber coil is coupled into the lower (upper) depolarizer section that comprises PM fiber 246 (243), 284 (241) and the 45° splice 245 (242) connecting them.

The CW light recombines with the CCW light at splitter/combiner 232. Only wavelength components with non-zero intensity along the pass-axis of the IOC 230 reach the rate detector 260 after being directed by the coupler 220. A typical light spectrum at the rate detector is shown by the light spectrum 180 in FIGURE 2.

Different from the prior art shown in FIGURE 1, a PM coupler 281 is inserted between the second IOC waveguide 235 and the 45° splice 245 in the lower depolarizer as shown in FIGURE 3. The coupler 281 passes a substantial amount of light propagating from the second lower PM fiber 284 to the first lower PM fiber 285 and vice versa. The coupler 281 couples a small fraction of CW light (propagating from the second lower PM fiber 284 to the first lower PM fiber 285) into a port 283. A polarizer 287 with polarization axis orientated identical to that of the IOC 230 passes the same wavelength components to an RIN detector 270 as those reaching a rate detector 260. An isolator 286 prevents any back-reflected light from entering the sensing loop.

It can be theoretically proved that the lightwave spectrum at the RIN detector 270 is identical to that at the rate detector 260. The lightwaves from the broadband light source 210 are unpolarized. The lightwaves are polarized by the waveguides of the IOC 230. The CW lightwave at the combiner 232 after transmitting through the whole fiber loop 250 can be expressed by the Jones matrix method.

$$E_{CW} = \begin{pmatrix} e^{i\phi_B} & 0 \\ 0 & \varepsilon \end{pmatrix} \begin{pmatrix} 1 & 0 \\ 0 & e^{-it_4} \end{pmatrix} \begin{pmatrix} \cos 45° & \sin 45° \\ -\sin 45° & \cos 45° \end{pmatrix} \begin{pmatrix} 1 & 0 \\ 0 & e^{-it_3} \end{pmatrix} \begin{pmatrix} A & B \\ C & D \end{pmatrix}$$

$$\cdot \begin{pmatrix} 1 & 0 \\ 0 & e^{-it_2} \end{pmatrix} \begin{pmatrix} \cos 45° & \sin 45° \\ -\sin 45° & \cos 45° \end{pmatrix} \begin{pmatrix} 1 & 0 \\ 0 & e^{-it_1} \end{pmatrix} \begin{pmatrix} e^{i\phi_B} & 0 \\ 0 & \varepsilon \end{pmatrix} \begin{pmatrix} E_{0x} \\ E_{0y} \end{pmatrix}$$

$$E_{CWx} = \frac{1}{2} E_{0x} e^{i2\phi_B + i\phi_R} \left( A - Be^{-it_2} + Ce^{-it_3} - De^{-it_2 - it_3} \right)$$

$$(1)$$

In the above expression, $E_{0x}$ and $E_{0y}$ are the electric field of the input light polarized along pass- and block-axis of the IOC 230. Without lost of generality, it is assumed here that the x-polarized light $E_{0x}$ is orientated along the IOC pass-axis, and the y-polarized light $E_{0y}$ is orientated along the IOC block axis. $t_1, t_2, t_3$, and $t_4$ are the phase delays incurred by the birefringent slow axis of (234+241), 243, 246 and (235+285+284) relative to their corresponding fast axis. $\phi_B$ is the bias modulation phase applied at a modulator 233, and $\phi_R$ is the rotation induced Sagnac phase. A, B, C, and D are the wavelength dependent Jones matrix elements of the SM coil in the fiber loop 250 which can be measured or simulated. $\varepsilon$ is the polarization amplitude extinction ratio of the IOC 230. When the IOC 230 has high polarization extinction ratio, the y-component of the electric field is negligibly small. Only the x-polarized light will reach the detector.

The CCW lightwave at the combiner 232 after it is transmitted through the fiber loop 250 can be similarly expressed as

$$E_{CCW} = \begin{pmatrix} e^{-i\phi_B} & 0 \\ 0 & \varepsilon \end{pmatrix} \begin{pmatrix} 1 & 0 \\ 0 & e^{-it_1} \end{pmatrix} \begin{pmatrix} \cos 45° & -\sin 45° \\ \sin 45° & \cos 45° \end{pmatrix} \begin{pmatrix} 1 & 0 \\ 0 & e^{-it_2} \end{pmatrix} \begin{pmatrix} A & C \\ B & D \end{pmatrix}$$
$$\cdot \begin{pmatrix} 1 & 0 \\ 0 & e^{-it_3} \end{pmatrix} \begin{pmatrix} \cos 45° & -\sin 45° \\ \sin 45° & \cos 45° \end{pmatrix} \begin{pmatrix} 1 & 0 \\ 0 & e^{-it_4} \end{pmatrix} \begin{pmatrix} e^{-i\phi_B} & 0 \\ 0 & \varepsilon \end{pmatrix} \begin{pmatrix} E_{0x} \\ E_{0y} \end{pmatrix}$$

$$E_{CCWx} = \frac{1}{2} E_{0x} e^{-i2\phi_B - i\phi_R} \left( A - B e^{-it_2} + C e^{-it_3} - D e^{-it_2 - it_3} \right)$$

$$(2)$$

The total field that reaches the rate detector 260 is

$$E_{rate} = \frac{1}{2} \beta E_{0x} \left( A - B e^{-it_2} + C e^{-it_3} - D e^{-it_2 - it_3} \right) \left( e^{-i2\phi_B - i\phi_R} + e^{i2\phi_B + i\phi_R} \right)$$
$$= \beta E_{0x} \left( A - B e^{-it_2} + C e^{-it_3} - D e^{-it_2 - it_3} \right) \cos \left( 2\phi_B + \phi_R \right)$$
$$= \beta E_{0x} U \cos \left( 2\phi_B + \phi_R \right)$$

$$(3)$$

Where β is a coefficient that takes into account the amplitude loss of light propagating from the combiner 232 to the rate detector 260. U is a simplifying symbol that stands for the expression in the first parentheses of the above equation. The intensity at the rate detector 260 is

$$I_{rate} = \frac{1}{2} \beta^2 \left| E_{0x} \right|^2 \left| U \right|^2 \left[ 1 + \cos \left( 4\phi_B + 2\phi_R \right) \right]$$

$$(4)$$

Since the A, B, C, and D matrix elements of the SM fiber coil 250 depend on wavelength, $|U|^2$ is a function of wavelength and describes the light power spectral distribution at the rate detector 260. The rate signal at the rate detector 260 contains the Sagnac phase that can be demodulated for rotation rate sensing.

The light that reaches the RIN detector 270 does not combine with its counter-propagating part and is not bias modulated. The intensity of the light that reaches the RIN detector 270 is

$$E_{RIN} = \alpha E_{0x} e^{i\phi_B} \left( A - B e^{-it_2} + C e^{-it_3} - D e^{-it_2 - it_3} \right) = \alpha E_{0x} e^{i\phi_B} U$$

$$(5)$$

$$I_{RIN} = \alpha^2 \left| E_{0x} \right|^2 \left| U \right|^2$$

$$(6)$$

where $\alpha$ is the amplitude loss incurred by the RIN coupler and path to the RIN detector 270. When comparing Equation 4 with Equation 6, the lightwave spectrum reaching the RIN detector 270 is the same as that at the rate detector 260, both described by $|U|^2$. However, the signal produced by the RIN detector 270 does not contain any intensity variation from Sagnac phase and bias modulation. This is ideal for RIN subtraction because the Sagnac phase induced intensity variation shall not be removed during RIN subtraction and are useful in the demodulation process for rate sensing.

The coupler 281 can also be placed between the IOC 230 waveguide 234 and the 45° splice 242 in the upper section of the depolarizer 240. The above theory showed that the spectrum of CW and CCW light tapped between the splitter/combiner 232 and the 45° splices 245 and 242 after transiting through the sensing loop is identical. The two configurations are equivalent and are considered covered by the same embodiment shown in FIGURE 3.

To reduce the polarization induced bias errors that the PM coupler in the sensing loop might introduce, PM couplers with as small as possible polarization cross-couplings are used, e.g. smaller than -25dB. The coupler shall be located as close as possible to the 45° splice so that even in cases where polarization cross-couplings cannot be avoided in the coupler, their location can be substantially close to that of the 45° splice and introduce negligible bias errors. This provides easier design for the depolarizer.

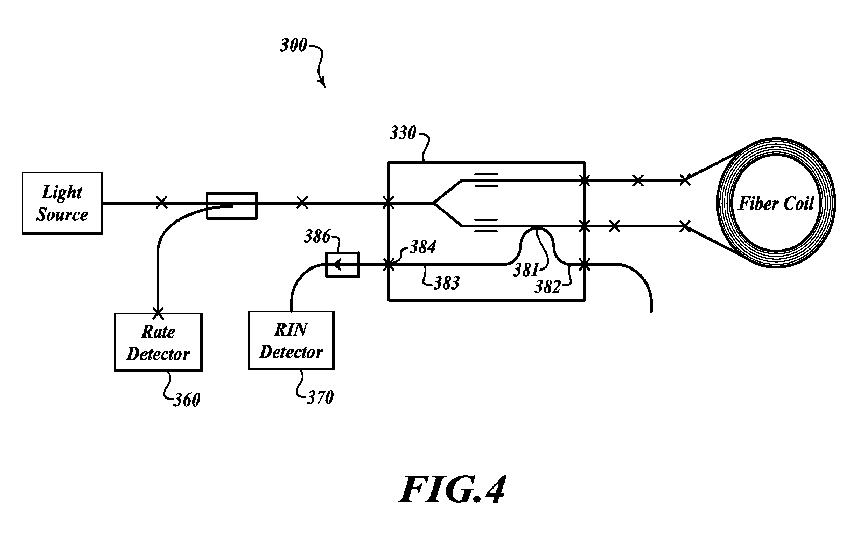

FIGURE 4 shows example of a gyro 300 formed according to another embodiment of the present invention. According to this embodiment, a RIN waveguide coupler 381 is incorporated into the IOC 230 so that it will not affect packaging of the depolarizer fiber. The RIN waveguide coupler 381 in an IOC 330 couples a small fraction of light into a waveguide 383 also in the IOC 330. The waveguide 383 directs the light to a RIN detector 370. The waveguide 383 is a polarizing waveguide that polarizes the light in the same way as other waveguides in the IOC 330, so the spectrum of light reaching the RIN detector 370 is substantially identical to that which reaches a rate detector 360. To prevent back-reflected light going into the sensing loop, the IOC interface 384 to the output coupling fiber has to be angle polished and an isolator 386 is inserted between the RIN detector 370 and the IOC 330. Another end 382 of the RIN waveguide coupler 381 is properly terminated to prevent any light reflections from re-entering the IOC 330.

Essentially in both embodiments, the RIN light is tapped inside the sensing loop before the light recombines with the counter-propagating lightwave but after the light transits through the coil and the depolarizers. The two embodiments shown in FIGURE 3 and FIGURE 4 are exemplary and by no means to limit realization of this concept to gyro having two depolarizers on each end of the coil fiber. Other gyros with different numbers of depolarizers placed at different locations of the optical circuits may use this invention as long as the light spectrum at the RIN detector are substantially identical to that at the rate detector.

While the preferred embodiment of the invention has been illustrated and described, as noted above, many changes can be made without departing from the spirit and scope of the invention. Accordingly, the scope of the invention is not limited by the disclosure of the preferred embodiment. Instead, the invention should be determined entirely by reference to the claims that follow.

**Claims**

**1.** The embodiments of the invention in which an exclusive property or privilege is claimed are defined as follows:
1. A fiber optic gyro comprising:

a light source (210);
a directional coupler (220) having at least three ports, the coupler configured to direct a substantial portion of light received at the first port to the second port and to direct a substantial portion of light received at the second port to the third port, the light source being coupled to the first port;
a rate photo detector (260) being connected to the third port of said directional coupler; an integrated optical circuit (IOC) (230) having at least three ports, the first port of the IOC being connected to the second port of the directional coupler;
a first depolarizing element (241, 242, 243);
a second depolarizing element (284, 285, 246, 245);
a sensing loop (250) having two ends, the first end of the loop being connected to the second port of the IOC via the first depolarizing element and the second end of the loop being connected to the third port of the IOC via the second depolarizing element; and
a relative intensity noise (RIN) (270) detector being connected to receive lightwaves at one of the depolarizing elements or near one of the second or third ports of the IOC.

**2.** The gyro (200) of Claim 1, wherein the IOC (230) comprises at least one polarizing element (234,235) and a splitter/combiner (232), light coupled into the first IOC port is polarized by the polarizing element and is split into two lightwaves, the resulting lightwaves being directed to the second and third IOC ports.

**3.** The gyro (200) of Claim 1, wherein at least one of the depolarizing elements comprises a RIN coupler (281) having at least three ports, the first port of the RIN coupler (281)connects to one of the second or third ports of the IOC (230) and the second port of the RIN coupler (281) connects to the associated depolarizing element, the RIN coupler (281) couples a predefined fraction of light transmitted from the sensing loop (250) to the third port of the RIN coupler (281).

**4.** The gyro (200) of Claim 3, further comprising an optical isolator (286) and a polarizing element (287), wherein the third port of RIN coupler (281) is connected to the RIN detector (270) via the optical isolator (286) and the polarizing element (287).

**5.** The gyro (200) of Claim 4, wherein a polarization pass-axis of the polarizing element is aligned in the same direction as that of polarization pass-axis of the IOC.

**6.** The gyro (300) of Claim 2, wherein the IOC further comprises a RIN waveguide coupler (381) that couples a fraction of light propagating between one of the second or third ports and the splitter/combiner (232) to the RIN detector (370);
wherein the light coupled out of the RIN coupler (381) is directed to the RIN detector (370) via the optical isolator (386).

**7.** The gyro (300) of Claim 6, wherein the IOC comprises a polarizing waveguide (383) in the optical path from the RIN waveguide coupler (381) to the optical isolator (386).

**8.** A method comprising:
generating a light;
separating the light into two light beams;
modulating each of the two light beams according to a predefined modulation scheme at an integrated optical circuit (IOC);
sending the modulated light beams in a clockwise (CW) and a counter-clockwise (CCW) direction through a sensing loop; and
directing a substantial portion of one of the CW or CCW light beams after transitioning through the sensing loop to a rate detector after the CW and CCW light beams recombined;
directing a substantial portion of one of the CW or CCW light beams after transitioning through a majority of the sensing loop to a relative intensity noise (RIN) detector at a point before the CW or CCW light beams return to the IOC.

**9.** The method of Claim 8, further comprising measuring RIN at the RIN detector.

**10.** The method of Claim 9, wherein directing the substantial portion of one of the CW or CCW light beams after transitioning through a majority of the sensing loop to the RIN detector comprises directing the substantial portion with a RIN coupler.

**FIG.1**  *(PRIOR ART)*

*FIG.2* *(PRIOR ART)*

**FIG.3**

**FIG.4**

EP 2 251 641 A1

Europäisches
Patentamt

European
Patent Office

Office européen
des brevets

**EUROPEAN SEARCH REPORT**

Application Number

EP 10 16 1689

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 5 469 257 A (BLAKE JAMES N [US] ET AL) 21 November 1995 (1995-11-21) * column 38, paragraph 5 - column 41, paragraph 1; figures 10a,b * * figures 9,11 * | 1-10 | INV. G01C19/72 |
| A | WO 00/36375 A1 (HONEYWELL INC [US]) 22 June 2000 (2000-06-22) * page 21, paragraphs 2,3,; figures 11B,12A,B, * * the whole document * | 1-10 | |
| A | US 2003/123064 A1 (SZAFRANIEC BOGDAN [US] ET AL) 3 July 2003 (2003-07-03) * paragraphs [0025] - [0027] - paragraphs [0034] - [0036]; figures 1,2,4,5 * * the whole document * | 1-10 | |
| A | WO 98/36243 A1 (ALLIED SIGNAL INC [US]) 20 August 1998 (1998-08-20) * page 5, lines 10-16 - page 7, lines 1-20 * * page 8, paragraph 3 - page 11, paragraph 2; figures 1-4 * * the whole document * | 1-10 | TECHNICAL FIELDS SEARCHED (IPC) G01C |

The present search report has been drawn up for all claims

| Place of search | Date of completion of the search | Examiner |
|---|---|---|
| The Hague | 19 August 2010 | Dragomir, Adrian |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

...................................................................
& : member of the same patent family, corresponding
document

EPO FORM 1503 03.82 (P04C01)

**ANNEX TO THE EUROPEAN SEARCH REPORT
ON EUROPEAN PATENT APPLICATION NO.**

EP 10 16 1689

This annex lists the patent family members relating to the patent documents cited in  the above-mentioned European search report.
The members are as contained in the European Patent Office EDP file on
The European Patent Office is in no way liable for these particulars which are merely given for the purpose of information.

19-08-2010

| Patent document cited in search report | | Publication date | Patent family member(s) | | Publication date |
|---|---|---|---|---|---|
| US 5469257 | A | 21-11-1995 | CA | 2175921 A1 | 01-06-1995 |
| | | | DE | 69423235 D1 | 06-04-2000 |
| | | | DE | 69423235 T2 | 21-06-2000 |
| | | | EP | 0730725 A1 | 11-09-1996 |
| | | | JP | 2847433 B2 | 20-01-1999 |
| | | | JP | 9505147 T | 20-05-1997 |
| | | | WO | 9514907 A1 | 01-06-1995 |
| WO 0036375 | A1 | 22-06-2000 | CA | 2355640 A1 | 22-06-2000 |
| | | | DE | 69931815 T2 | 14-06-2007 |
| | | | EP | 1149271 A1 | 31-10-2001 |
| | | | JP | 4052801 B2 | 27-02-2008 |
| | | | JP | 2002532705 T | 02-10-2002 |
| | | | US | 6175410 B1 | 16-01-2001 |
| US 2003123064 | A1 | 03-07-2003 | AU | 2002364176 A1 | 30-07-2003 |
| | | | CA | 2471770 A1 | 24-07-2003 |
| | | | EP | 1461588 A1 | 29-09-2004 |
| | | | JP | 2005515417 T | 26-05-2005 |
| | | | WO | 03060427 A1 | 24-07-2003 |
| WO 9836243 | A1 | 20-08-1998 | AT | 207608 T | 15-11-2001 |
| | | | DE | 69802166 D1 | 29-11-2001 |
| | | | DE | 69802166 T2 | 28-11-2002 |
| | | | EP | 0960319 A1 | 01-12-1999 |
| | | | US | 5898496 A | 27-04-1999 |

EPO FORM P0459

For more details about this annex : see Official Journal of the European Patent Office, No. 12/82